# EUROPÄISCHE PATENTANMELDUNG

(11) **EP 3 578 905 A1**
(43) Veröffentlichungstag der Anmeldung: **11.12.2019**
(21) Anmeldenummer: 19175568.5
(22) Anmeldetag: 21.05.2019
(51) Int. Cl.: F25D 17/06, F25D 17/08, F25D 23/00, F25D 23/06

(54) **KÜHLGERÄT MIT EINEM BEFESTIGUNGSMECHANISMUS FÜR EIN BAUTEIL IM NUTZRAUM**

(30) Priorität: 06.06.2018 CH 7302018
(71) Anmelder: V-Zug AG, 6300 Zug (CH)
(72) Erfinder: Muther, Marco, 8372 Wiezikon (CH); Diana, Emanuele, 9327 Tübach (CH); Bachmann, Adrian, 8590 Romanshorn (CH)
(74) Vertreter: Hochreutener, Joel Marc

(57) **Zusammenfassung**

An einer Wandplatte (42) des Nutzraums (2) eines Kühlgeräts ist ein Bauteil (3) zu befestigen. Hierzu ist ein Befestigungsmechanismus (50, 54) vorgesehen, der eine Befestigungsvorrichtung (50) am Bauteil sowie eine Befestigungsvertiefung (54) an der Wandplatte (42) aufweist. Die Befestigungsvertiefung (54) besitzt einen hantelförmigen Querschnitt mit einem verengten Mittelbereich, in dem hinterschnittene Wandabschnitte (80) vorgesehen sind. In diesen Mittelbereich greift ein Spreizelement (56) der Befestigungsvorrichtung (50) unter elastischer Verformung ein und wird an den hinterschnittenen Wandabschnitten (80) gehalten. Die Befestigungsvertiefung (54) kann in einfacher Weise mittels Tiefziehen gefertigt werden.

## Beschreibung

### Gebiet der Erfindung

Die Erfindung betrifft ein Kühlgerät gemäss Oberbegriff von Anspruch 1. Insbesondere besitzt dieses einen Nutzraum, wobei die Wand des Nutzraums von mindestens einer Wandplatte gebildet wird. Weiter ist ein Bauteil vorsehen, das über einen Befestigungsmechanismus innenseitig an der Wandplatte befestigt ist.

### Hintergrund

Kühlgeräte besitzen einen Nutzraum, in welchem die zu kühlenden Lebensmittel oder anderes Kühlgut gelagert werden. Eine oder mehrere Wandplatten bilden die Innenwand des Nutzraums.

Im Nutzraum können verschiedene Bauteile vorgesehen sein, so z.B. Isolations- und/oder Kühlelemente, welche an der Wandplatte befestigt werden müssen.

### Darstellung der Erfindung

Es stellt sich die Aufgabe, ein Kühlgerät dieser Art mit einem geeigneten Befestigungsmechanismus zum Befestigen von Bauteilen innen an der Wandplatte bereitzustellen.

Diese Aufgabe wird vom Gerät gemäss Anspruch 1 gelöst.

Demgemäss besitzt das Gerät zumindest die folgenden Teile:
- Ein Nutzraum: Im Nutzraum werden die zu kühlenden Lebensmittel gelagert.
- Mindestens eine Wandplatte: Diese bildet eine Wand des Nutzraums. Die Wandplatte kann insbesondere eine vertikale Seitenwand, die Vorderwand, die Hinterwand, die Decke und/oder den Boden des Innenraums bilden.
- Mindestens ein Bauteil, das innenseitig an der Wandplatte befestigt ist.
- Ein Befestigungsmechanismus: Dieser dient der Befestigung des Bauteils an der Wandplatte.

Dabei weist der Befestigungsmechanismus eine am Bauteil angeordnete Befestigungsvorrichtung sowie eine an der Wandplatte angeordnete Befestigungsvertiefung auf, welche zusammenwirken. Anstelle einer Befestigungsvertiefung kann an der Wandplatte auch ein Befestigungsvorsprung angeordnet sein.

Die Befestigungsvertiefung bzw. der Befestigungsvorsprung besitzt mindestens einen hinterschnittenen Wandabschnitt, und die Befestigungsvorrichtung besitzt ein Spreizelement, welches in die Befestigungsvertiefung eingreift bzw. den Befestigungsvorsprung umgreift und an der hinterschnittenen Wand gehalten wird.

Auf diese Weise entsteht eine einfache Verbindung zwischen dem Bauteil und dem Bauteil.

Mit Vorteil besitzt die Befestigungsvertiefung bzw. der Befestigungsvorsprung zwei hinterschnittene Wandabschnitte, zwischen die das Spreizelement eingreift bzw. welche das Spreizelement umgreift. Dadurch ergibt sich ein besserer Halt.

Die Befestigungsvertiefung bzw. der Befestigungsvorsprung kann eine Längsrichtung besitzen, entlang welcher zwei Aussenbereiche und zwischen den Aussenbereichen einen Mittelbereich angeordnet sind. Der mindestens eine hinterschnittene Wandabschnitt ist im nicht notwendigerweise zentrisch angeordneten Mittelbereich angeordnet. Sind zwei hinterschnittene Wandabschnitte vorgesehen, so sind beide im Mittelbereich angeordnet. Das Spreizelement greift zumindest in den Mittelbereich ein.

In den Aussenbereichen ist die Befestigungsvertiefung bzw. der Befestigungsvorsprung vorzugsweise nicht hinterschnitten, d.h. sie weist dort keine hinterschnittenen Wandabschnitte auf sondern läuft nach aussen hin zunehmend zusammen, was das Entformen der Befestigungsvertiefung im Tiefzug vereinfacht.

Weiter kann die Befestigungsvorrichtung zwei Zentrierelemente aufweisen, welche in die Aussenbereiche eingreifen und zwischen denen das Spreizelement angeordnet ist. Auf diese Weise kann das Spreizelement einfach im Mittelbereich zentriert werden. Zudem kann das Totvolumen in der Befestigungsvertiefung und so die Gefahr eines Ansammelns von Wasser reduziert werden.

Das Bauteil kann einen Formkörper aus Isolationsmaterial aufweisen. In diesem Falle ist im Formkörper mit Vorteil eine Öffnung vorgesehen, in welcher das Spreizelement aufgenommen wird. Insbesondere ist es in dieser Öffnung seitlich, d.h. parallel zur Wandplatte, gehalten.

Mit Vorteil besitzt das Bauelement mindestens eine Schulter, welche an der Wandplatte anschlägt und in dieser Position vom Befestigungsmechanismus an die Wandplatte gezogen wird. Dadurch ergibt sich ein spielfreier Halt.

In einer bevorzugten Ausführung bildet das zu befestigende Bauteil ein Rückwandelement des Nutzraums, in oder an dem ein Kühlluftkanal ausgestaltet ist. Dabei ist im oder am Kühlluftkanal ein Kühlelement angeordnet, so dass die durch den Kühlluftkanal strömende Luft gekühlt werden kann.

Beim Bauteil kann es sich beispielsweise aber auch um einen Kühlguthalter (wie z.B. einer Einhängeschale), ein Bedienelement, ein Beleuchtungselement, ein Lüfter, ein Filter (z.B. Luftfilter), ein Wasserspender, ein Ice-Maker, eine No-Frost Einheit oder ein anderes Element handeln, welches in einem Kühlfach, Gefrierfach oder einem anderen temperierten Fach (z.B. Temperaturzone für Wein, Kellerfach oder ähnlich) temporär oder demontierbar permanent befestigt werden soll. Dabei sollte das Eigengewicht auf die Klemmkraft abgestimmt sein und typischerweise nicht schwerer als z.B. 1 kg, oder nicht schwerer als z.B. 2 kg, oder nicht schwerer als z.B. 5 kg sein.

Mit Vorteil kann der Befestigungsmechanismus mittels Zug reversibel, d.h. zerstörungsfrei, gelöst werden, so dass das Bauteil bei Bedarf dem Nutzraum entnommen werden kann.

Beim Kühlgerät handelt es sich mit Vorteil um einen Kühlschrank und/oder um ein Gefriergerät, insbesondere um ein Haushaltsgerät. Es kann sich jedoch auch um ein Kühlgerät für andere Anwendungen handeln, z.B. um ein Kühlgerät für Medikamente oder für anderes Kühlgut.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Ansicht eines Teils eines Kühlgeräts (Türe nicht dargestellt),
Fig. 2 einen Ausschnitt des Kühlgeräts gemäss Fig. 1 von vorne,
Fig. 3 eine Ansicht des Rückwandelements von schräg vorne,
Fig. 4 das Rückwandelement von Fig. 3 ohne Deckplatte,
Fig. 5 die Deckplatte des Rückwandelements von Fig. 3,
Fig. 6 das Rückwandelement von Fig. 3 von schräg von hinten,
Fig. 7 eine Schnittansicht durch das Rückwandelement von Fig. 6,
Fig. 8 die Schnittansicht von Fig. 7 von der Schnittseite her,
Fig. 9 ein etwas vereinfacht dargestelltes Detail von Fig. 8,
Fig. 10 einen etwas vereinfacht dargestellten Schnitt durch das Rückwandelement und die Hinterwand des Geräts,
Fig. 11 eine Detailansicht einer Befestigungsvorrichtung an der Rückseite des Rückwandelements,
Fig. 12 das Spreizelement der Befestigungsvorrichtung,
Fig. 13 die zugehörige Befestigungsvertiefung an der Hinterwand,
Fig. 14 einen Schnitt entlang Linie A-A von Fig. 16 durch eine in ihrer Befestigungsvertiefung eingeschnappte Befestigungsvorrichtung,
Fig. 15 einen Schnitt entlang Linie B-B von Fig. 16,
Fig. 16 einen Schnitt entlang Linie C-C von Fig. 14 und
Fig. 17 einen Schnitt entsprechend Fig. 9 durch eine Ausführungsvariante.

### Wege zur Ausführung der Erfindung

### Definitionen:

Die Begriffe "hinten", "Rückseite", "vorne", "Vorderseite" sind so definiert, dass sich die Türe des Kühlgeräts vorne, d.h. auf der Vorderseite befindet, während die hinten am Gerät angeordnete Rückseite die der Türe gegenüber liegende Geräteseite bezeichnet.

Begriffe wie "oben", "unten", "horizontal" und "vertikal" beziehen sich auf die bestimmungsgemässe Orientierung des Geräts, bei welcher die Türe vertikal verläuft.

Begriffe wie "innen", "innenseitig", "aussen", "aussenseitig" beziehen sich auf den Nutzraum des Geräts, welcher als das Innere betrachtet wird. Bei einem Bauteil ist bezeichnet somit "innen" die der Mitte des Nutzraums zugewandte Seite und Aussen die von der Mitte des Nutzraums abgewandte Seite.

Ein "Isolationsmaterial" ist ein Körper mit einer Wärmeleitfähigkeit von weniger als 0.1 W/mK, insbesondere von weniger als 0.05 W/mK. Beim Vakuum-Isolationspanelen kann der Wert sogar unter 0.01 W/mK liegen, z.B. bei 0.003 - 0.006 W/mK.

### Übersicht:

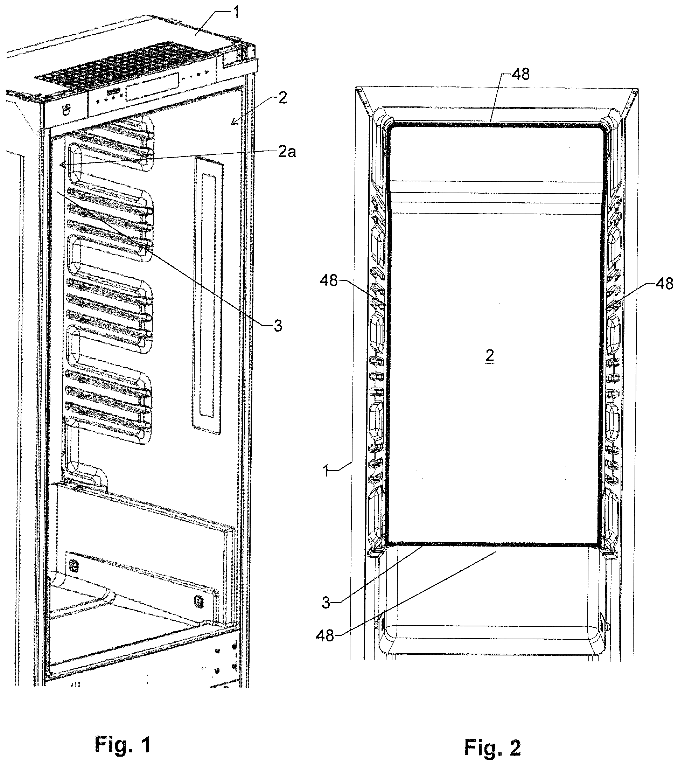

Fig. 1 und 2 zeigen als Beispiel eines Kühlgeräts einen Kühlschrank, wobei die Türe nicht gezeigt ist. Der Kühlschrank besitzt ein Gehäuse 1, in dessen Innern ein Nutzraum 2 zur Aufnahme von zu lagernden Lebensmitteln angeordnet ist. In einem Schnitt in vertikaler Richtung besitzt der Nutzraum 2 ungefähr rechteckigen Querschnitt.

An der Rückwand 2a des Nutzraums ist ein Rückwandelement 3 angeordnet, welches in Fig. 2 mit fettem Umriss hervorgehoben ist.

Das Rückwandelement 3 ist mittels Befestigungsvorrichtungen im Nutzraum 2 eingeschnappt und kann diesem entnommen werden.

Das Rückwandelement 3 und dessen Befestigungsmechanismus werden im Folgenden genauer beschrieben.

### Rückwandelement:

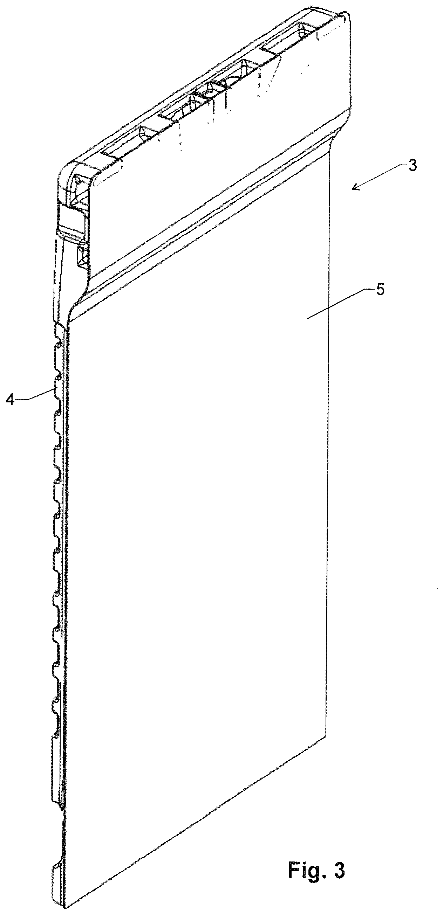

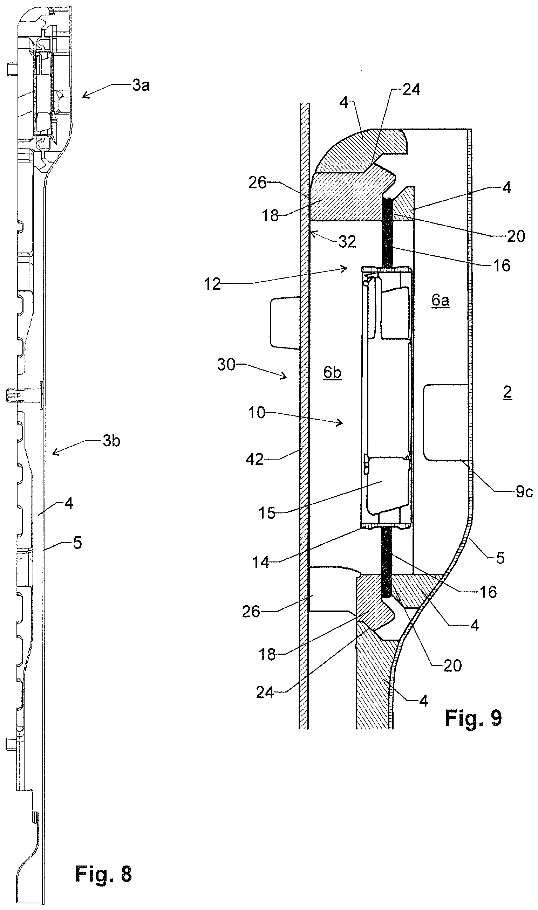

Das Rückwandelement 3 ist in Fig. 3 - 7 von vorne und hinten und in Fig. 8 in einem vertikalen Schnitt dargestellt.

Es besitzt einen im Wesentlichen rechteckigen Umriss und hat Plattenform. In der dargestellten Ausführung ist es am oberen Ende etwas dicker als am unteren Ende.

Das Rückwandelement 3 besitzt einen Formkörper 4 aus einem Isolationsmaterial, insbesondere aus expandiertem Polystyrol, expandiertem Polypropylen oder expandiertem Polyethylen, und/oder aus Mischungen von zwei oder mehr dieser Materialien und/oder aus Hartschaum. Der Formkörper 4 ist vorzugsweise einstückig ausgeführt. Er kann jedoch auch aus mehreren, miteinander verbundenen oder aneinandergereihten Formteilen bestehen.

Auf der Vorderseite des Formkörpers 4 ist eine Deckplatte 5 befestigt. Beispielsweise kann die Deckplatte 5 auf das Formteil aufgeklebt oder über eine lösbare Verbindung befestigt sein.

Die Deckplatte 5 besteht aus einem Material höherer Festigkeit als der Formkörper 4. Vorzugsweise besteht sie aus Kunststoff, z.B. Polystyrol, Metall und/oder Glas.

Die Deckplatte 5 schützt den Formkörper 4 vor mechanischen und chemischen Einflüssen. Sie ist vorzugsweise im Wesentlichen glatt, so dass sie gut gereinigt werden kann.

Sie ist mit Vorteil einstückig ausgeführt.

Für einen optimalen Schutz erstreckt sich die Deckplatte 5 vorderseitig bevorzugt über das ganze Wandelement 3 oder zumindest über den ganzen Formkörper 4.

Mit Vorteil ist die Deckplatte 5 geschlossen, d.h. sie besitzt keine Öffnungen, zumindest keine Lüftungsöffnungen für den Kühlluftkanal (höchstens lokale Aussparungen an ihren Rändern).

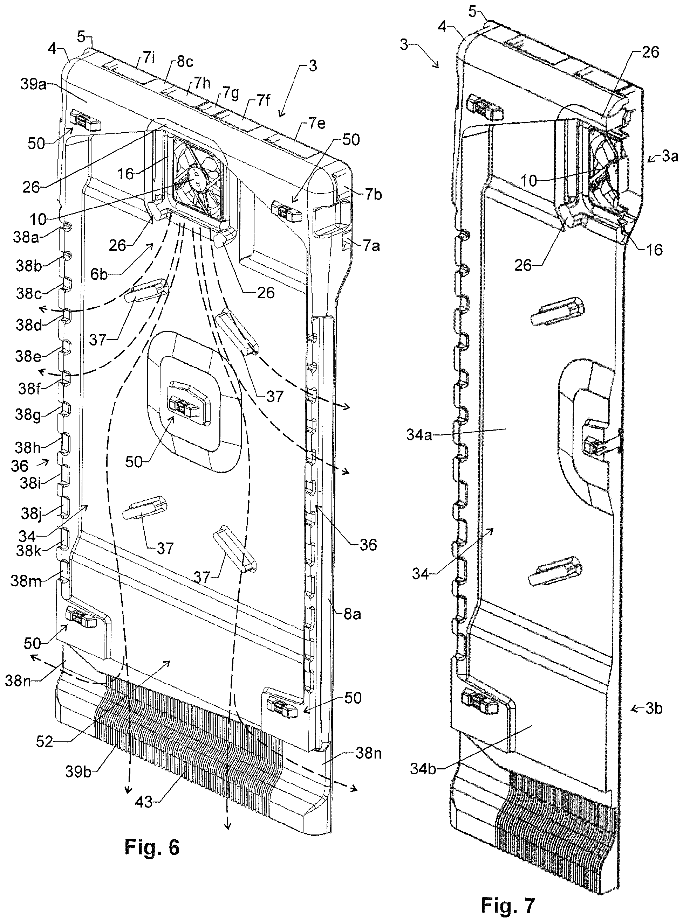

Vorzugsweise besitzt das Rückwandelement 3 einen ersten Abschnitt 3a (vgl. Fig. 7, 8) und einen zweiten Abschnitt 3b. Im Abschnitt 3a ist der Lüfter 10 angeordnet. In diesem Abschnitt 3a ist das Rückwandelement 3 in der Richtung von vorne nach hinten dicker als im zweiten Abschnitt 3b. Damit wird dem Umstand Rechnung getragen, dass im Abschnitt 3a die beiden Teile 6a, 6b des Kühlluftkanals überlappen, während im Abschnitt 3b dies nicht der Fall ist. Durch diese Ausgestaltung nimmt das Rückwandelement 3 weniger Volumen ein.

### Kühlluftkanal:

Wie eingangs erwähnt, ist im oder am Rückwandelement 3 ein Kühlluftkanal ausgeformt. Er dient dazu, Kühlluft an einem Kühlelement vorbei zu führen. Der Aufbau des Kühlluftkanals wird im Folgenden genauer beschrieben.

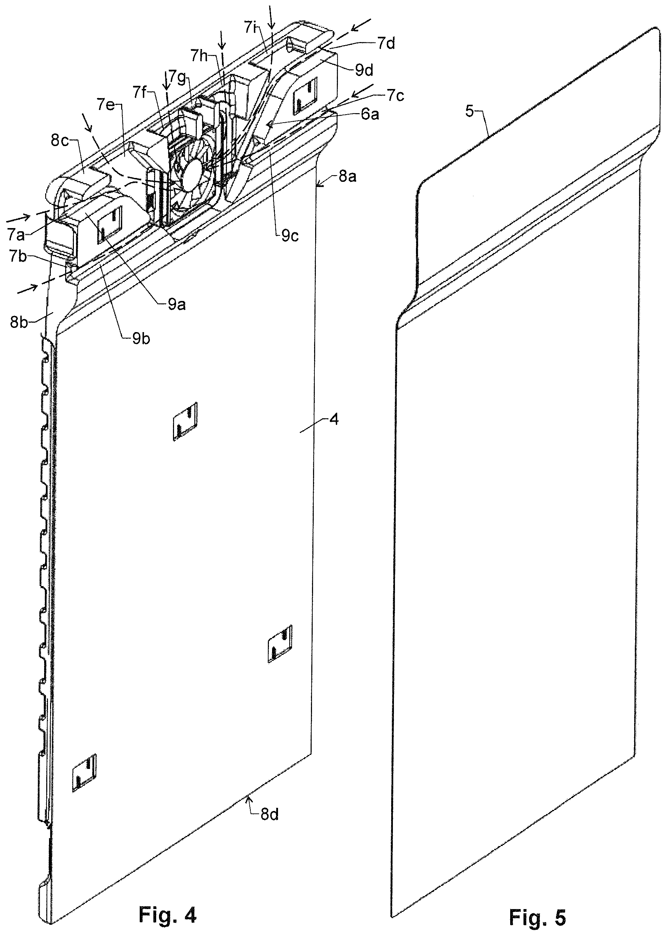

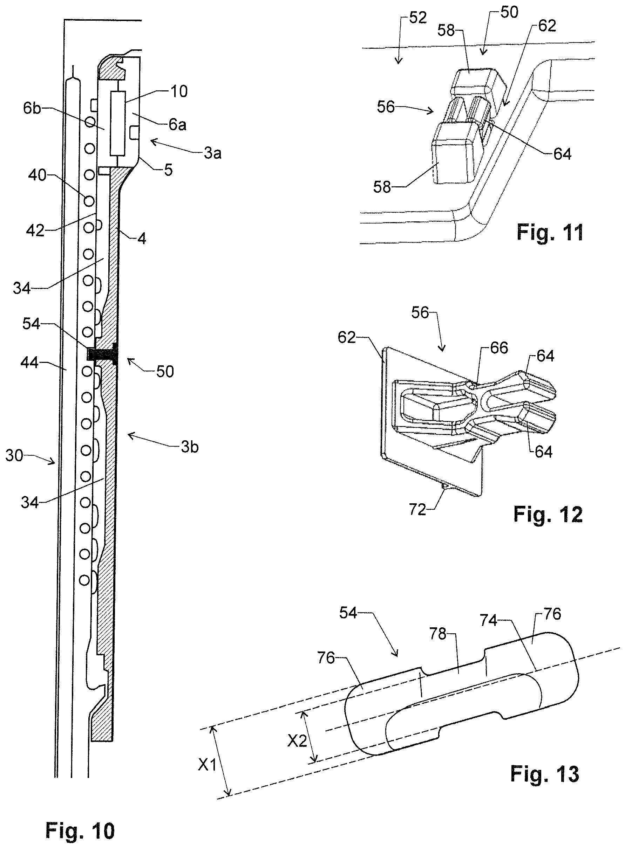

In der dargestellten Ausführung ist ein erster Teil 6a des Kühlluftkanals an der Vorderseite des Formkörpers 4 ausgestaltet, und zwar zwischen dem Formkörper 4 und der Deckplatte 5. Dieser erste Teil ist am besten aus Fig. 4 und 10 ersichtlich.

Beispielsweise besitzt der Kühlluftkanal mehrere Einlässe 7a - 7i. Davon sind z.B. vier Einlässe 7a - 7d an den seitlichen Kanten 8a, 8b des Rückwandelements 3 angeordnet, insbesondere im oberen Viertel der seitlichen Kanten 8a, 8b, und die übrigen an der Oberkante 8c.

Von den Einlässen 7a - 7i verlaufen Kanalabschnitte, welche zwischen Vertiefungen 9a, 9b, 9c... im Formkörper 3 und der Deckplatte 5 gebildet werden, zu einem Lüfter 10.

Der Lüfter 10 ist bei einer sich von vorne nach hinten durch den Formkörper erstreckenden Öffnung 12 angeordnet und in Fig. 9 im Detail dargestellt.

Der Lüfter 10 besitzt einen starren Rahmen 14, in welchem ein Lüfterrad 15 und dessen Antrieb angeordnet sind. Der Rahmen 14 ist über ein Dämpfelement 16 am Formkörper 4 befestigt. Das Dämpfelement 16 ist aus einem anderen, vorzugsweise elastischerem und/oder stärker dämpfenden Material als der Rahmen, insbesondere aus einem thermoplastischen Elastomer. Es dient dazu, den Lüfter 10 akustisch vom Formkörper 4 abzukoppeln und so Schallemissionen zu reduzieren.

Das Dämpfelement 16 bildet in der gezeigten Ausführung gegen alle Seiten des Lüfters 10 eine luftdichte Membran zwischen dem Rahmen 14 des Lüfters 10 und dem Formkörper 4, so dass die durch die Öffnung tretende Luft durch den Lüfter 10 gezwungen wird.

In der dargestellten Ausführung erstreckt sich das Dämpfelement 16 rund um den Lüfter 10.

Es kann in geeigneter Weise am Formkörper 4 befestigt sein. Hierzu ist, wie am besten in Zusammenschau von Fig. 6, 7 und 9 ersichtlich, in der vorliegenden Ausführung ein Halterahmen 18 vorgesehen. Das Dämpfelement 16 ist zwischen einem Absatz 20 des Formkörpers 4 und dem Halterahmen 18 eingeklemmt.

Der Halterahmen 18 ist in einer Vertiefung des Formkörpers 4 eingesetzt und vorzugsweise dort in Hinterschneidungen 24 eingeschnappt, so dass er nur unter Verformung entnommen werden kann.

Mit Vorteil erstreckt sich der Halterahmen 18 als geschlossener Rahmen um den ganzen Lüfter 10.

Weiter besitzt der Halterahmen 18 nach hinten ragende Vorsprünge 26, welche bei bestimmungsgemässer Montage des Rückwandelements 3 gegen die Vorderseite der Hinterwand 30 abgestützt werden, die sich hinter dem Rückwandelement 3 befindet und ein Gegenlager 32 bildet.

Hinten an der Öffnung 10 schliesst der zweite Teil 6b des Kühlluftkanals an, vgl. Fig. 6, 9, 10.

Hierzu besitzt der Formkörper 4 auf seiner Rückseite eine oder mehrere Ausnehmungen 34, welche den vorderseitigen Bereich des Teils 6b des Kühlluftkanals bildet bzw. bilden.

Wie am besten aus Fig. 6 ersichtlich, erstreckt sich die Ausnehmung 34 vom Bereich des Lüfters 10 gegen unten, und zwar bis an das untere Ende des Formkörpers 4.

Der Formköper 4 kann in einer Ausführung zumindest zwei seitliche Begrenzungen 36 für die Ausnehmung 34 bilden, welche die Hinterwand 30 im montierten Zustand des Wandelements 3 berühren und so den Kühlluftkanal seitlich begrenzen.

Eine oder vorzugsweise beide dieser Begrenzungen 36 weist bzw. weisen zurückversetzte Bereiche 38a - 38n auf, welche die Hinterwand nicht berühren und die mehrere seitliche Auslässe des Kühlluftkanals an den Seitenkanten 8a, 8b des Rückwandelements 3 bilden.

Wie dargestellt, sind die zurückversetzten Bereiche 38a - 38n nicht alle gleich gross und gleich beabstandet. Dies erlaubt es, den Luftfluss räumlich geeignet einzustellen. Mit Vorteil sind die zurückversetzten Bereiche 38a - 38n und somit die Auslässe des Kühlluftkanals im oberen Bereich des Rückwandelements 3 kleiner und/oder weiter voneinander beabstandet als im unteren Bereich des Rückwandelements 3, so dass mehr Luft unten als oben austritt. Dadurch wird die Kühleffizienz verbessert.

Weiter bildet der gezeigte Formkörper 4 eine obere Begrenzung 39a der Ausnehmung 34, welche die Hinterwand 30 im montierten Zustand des Wandelements 3 berührt. Mit Vorteil schliesst diese den zweiten Teil 6b des Kühlluftkanals nach oben ganz ab.

Zudem bildet der gezeigte Formkörper 4 eine untere Begrenzung 39b der Ausnehmung 34. In der dargestellten Ausführung weist die untere Begrenzung 39b einen oder mehrere zurückversetzte Bereiche 43 auf, welcher bzw. welche die Hinterwand 30 nicht berührt und so einen oder mehrere Auslässe für den Kühlluftkanal an der Unterkante 8d des Rückwandelements 3 bildet bzw. bilden.

Weiter kann der Formkörper 4 Abstandshalter 37 bilden, welche die Ausnehmung 34 gegen die Rückwand abstützen. Zudem können solche Abstandshalter 37 auch als Luftführungselemente eingesetzt werden.

Mit Vorteil sind die Abstandshalter 37 mindestens teilweise so angeordnet, dass sie keine horizontalen oder gar wannenförmigen Bereiche bilden, an denen sich Tauwasser bzw. Kondensat sammeln könnte. Insbesondere verlaufen die Oberkanten zumindest eines Teils der Abstandshalter 37 schräg zur Horizontalen.

Wie am besten aus Fig. 7 ersichtlich, ist die Ausnehmung 34 mit Vorteil nicht überall gleich tief. Insbesondere besitzt sie einen oberen, tieferen Bereich 34a und einen unteren, weniger tiefen Bereich 34b. Durch diese Ausgestaltung kann der Luftfluss im Kühlluftkanal den Anforderungen entsprechend dosiert werden.

Wie aus Fig. 10 ersichtlich, ist in der Hinterwand 30 der Verdampfer 40 einer Wärmepumpe als Kühlelement angeordnet. Er ist thermisch mit einer Wandplatte 42 verbunden, welche die Innenseite der Hinterwand 30 bildet, d.h. die zum Nutzraum 2 hin gerichtete Seite.

Hinter dem Verdampfer 40, d.h. nach aussen hin, ist ein Isolationselement 44, insbesondere ein Vakuum-Isolationspanel, angeordnet.

Im Betrieb fördert der Lüfter 10 die Luft von vorne nach hinten, d.h. er saugt die Luft durch die Einlässe 7a - 7i an, fördert sie durch den ersten Teil 6a des Kühlluftkanals, durch die Öffnung 12, durch den zweiten Teil 6b des Kühlluftkanals und zu den Auslässen 38a - 38n und 43.

Beispiele für entsprechende Luftströmungen sind gestrichelt in Fig. 4 und 6 eingezeichnet.

Dabei wird die Luft bei ihrem Durchlauf durch den zweiten Teil 6b des Kühlluftkanals vom Verdampfer 40 gekühlt.

In der gezeigten Ausführung läuft die Luft im Wesentlichen von oben nach unten durch den Kühlluftkanal und streicht von oben nach unten am Kühlelement bzw. Verdampfer 40 vorbei.

In der gezeigten Ausführung ist das Kühlelement (d.h. der Verdampfer 40) hinter der Wandplatte 42 angeordnet. Er kann jedoch auch im Kühlluftkanal selbst angeordnet und z.B. beidseitig von Kühlluft umströmt sein.

Mit Vorteil wird das Wärmepumpenfluid von oben nach unten durch den Verdampfer geführt, so dass oben am Verdampfer die tiefsten Temperaturen herrschen. Dadurch wird die Luft dort verhältnismässig stark gekühlt und besitzt auch bei Austritt an den obersten Auslässen, z.B. den Auslässen 38a, 38b, bereits eine relativ tiefe Temperatur.

Da die Luft an den Kanten 8a - 8d des Rückwandelements 3 ein- und austritt, sind in diesem Bereich Spalten bzw. Abstände zu den angrenzenden Bauteilen vorzusehen, zumindest im Bereich der Ein- und Auslässe. Diese Spalten 48 zu den Seitenwänden und/oder dem Boden und oder der Decke des Nutzraums 4, welche in Fig. 2 angedeutet sind, haben vorteilhaft eine Breite von 10mm oder weniger und/oder mindestens 2 mm, insbesondere mindestens 5 mm.

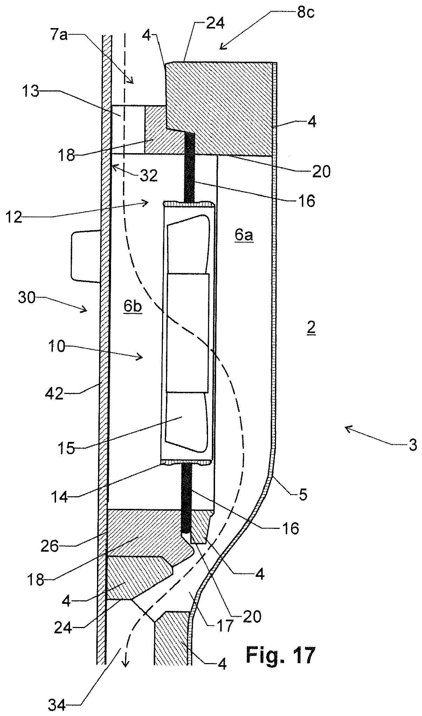

In der bisher gezeigten Ausführung wird die Luft von vorne nach hinten durch den Lüfter 10 gefördert. Fig. 17 zeigt eine alternative Variante, bei welcher die Luft von hinten nach vorne durch den Lüfter 10 läuft. Hierzu ist der hintere Teil 6b des Kühlluftkanals über eine oder mehrere Ansaugkanäle 13 mit einem oder mehreren Einlässen verbunden. In der Ausführung nach Fig. 17 ist ein solcher Einlass 7a dargestellt.

Die Einlässe befinden sich wiederum mit Vorteil an den Kanten des Rückwandelements 3. Im Beispiel nach Fig. 17 ist mindestens ein Einlass 7a an der Oberkante 8c angeordnet.

Über den Lüfter 12 wird die Luft in den vorderen Teil 6a des Kühlluftkanals gefördert. Von dort gelangt die Luft im gezeigten Ausführungsbeispiel durch einen oder mehrere Transferkanäle 17 wieder durch den Formkörper 4 auf die Rückseite des Formkörpers 4, mit Vorteil wiederum in eine Ausnehmung 34 an der Rückseite des Formkörpers 4.

In Fig. 17 ist der Pfad der Kühlluft mit einem gestrichelten Pfeil dargestellt.

Sowohl in der Ausführung nach Fig. 17 als auch in jener nach Fig. 9 handelt es sich beim Lüfter 10 um einen Axiallüfter, dessen Rotationsachse im Wesentlichen senkrecht zur Rückwand des Geräts steht (z.B. unter Einem Winkel zwischen 80° - 90° zur Rückwand). Dies ermöglicht einen kompakten Aufbau geringer Tiefe.

Denkbar sind jedoch auch Ausführungen mit anderen Arten von Lüftern.

### Befestigungsmechanismus:

Wie erwähnt, ist das Rückwandelement 3 über Befestigungsvorrichtungen im Gerät lösbar befestigt, insbesondere eingeschnappt.

Im Folgenden wird der Aufbau dieser Befestigungsvorrichtungen genauer beschrieben.

Wie in Fig. 6 dargestellt, sind an der Rückseite, d.h. an der vom Nutzraum 2 weg gerichteten Aussenseite 52, des Rückwandelements 3 ein oder mehrere Befestigungsvorrichtungen 50 angeordnet. Zusammen mit Befestigungsvertiefungen 54 in der Wandplatte 42 bilden sie einen Befestigungsmechanismus, der den Zweck hat, das Rückwandelement 3 lösbar an der der Hinterwand 30 zu befestigen. Eine der Befestigungsvertiefungen 54 ist in Fig. 10 dargestellt

Aufbau und Funktion des Befestigungsmechanismus erschliesst sich aus Fig. 11 - 16.

Jede Befestigungsvorrichtung 50 der dargestellten Ausführung umfasst ein Spreizelement 56, das am Rückwandelement 3 befestigt ist und dessen rückseitiges (d.h. aussenseitiges Ende) zwischen zwei Zentrierelementen 58 des Formkörpers 4 angeordnet ist.

Die Zentrierelemente 58 verdrängen die Luft in den Befestigungsvertiefungen und verhindern so, dass sich dort viel Wasser ansammeln kann.

Die Zentrierelemente 58 werden von nach hinten bzw. aussen ragenden Vorsprüngen des Formkörpers 4 bzw. des Rückwandelements 3 gebildet.

Das Spreizelement 56 besitzt einen Kopf 62 am innenseitigen Ende, mindestens zwei Spreizglieder 64 am aussenseitigen Ende, sowie einen Körper 66, der den Kopf 62 mit den Spreizgliedern 66 verbindet.

Der Kopf 62 hat einen grösseren Durchmesser und/oder eine grössere Fläche als der Körper 66 und die Spreizglieder 64.

Das Spreizelement 56 besteht aus einem elastischen Material, vorzugsweise derart, dass die Spreizglieder 64 unter elastischer Verformung um mindestens einen Millimeter oder mindestens einem halben Millimeter aufeinander zubewegt werden können, ohne dass es zu irreversiblen Verformungen oder Brüchen kommt. Beispielsweise besteht es aus thermoplastische Kunststoffe wie z.B. POM, PA6, PE-LD, PP, ABS.

Mit Vorteil besteht das Spreizelement 56 aus einem härteren Material als der Formkörper 4.

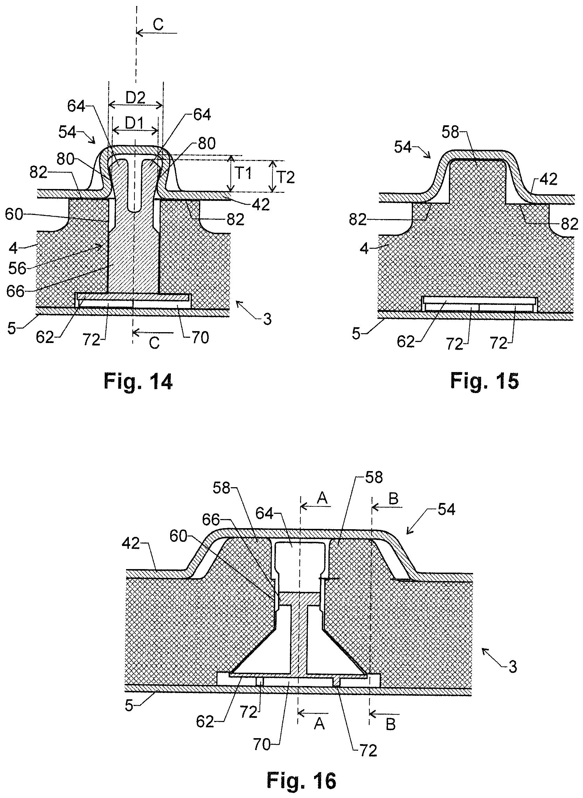

Wie aus Fig. 14 - 16 ersichtlich, sitzt das Spreizelement 56 in einer Öffnung 60 des Formkörpers 4. In der dargestellten Ausführung liegt der Kopf 62 innenseitig am Formkörper 4 an.

Mit Vorteil sitzt der Kopf in einer Vertiefung 70, welche innenseitig (d.h. nutzraumseitig) im Formkörper 4 ausgebildet ist.

Nach aussen ist die Vertiefung 70 von der Deckplatte 5 abgedeckt, so dass das Spreizelement 56 im Rückwandelement 3 gehalten ist. Die Deckplatte 5 ist, wie erwähnt, an der Innenseite des Formkörpers 4 befestigt.

Der Kopf 62 des Spreizelements 56 kann die die Deckplatte 5 berühren, so dass das Spreizelement 56 im Wesentlichen spielfrei gehalten wird. In der dargestellten Ausführung liegt der Kopf 62 jedoch nicht ganzflächig an der Deckplatte 5 an, sondern er besitzt eine oder mehrere Erhöhungen 72, welche die Deckplatte 5 in einer Fläche berühren, welche wesentlich kleiner, vorzugsweise mindestens zehnmal kleiner, als die innenseitige Gesamtoberfläche des Kopfs 62 ist. Dadurch wird der Wärmeübertrag vom Spreizelement 56 auf die Deckplatte 5 reduziert.

Die Befestigungsvorrichtung 50 wirkt mit einer der Befestigungsvertiefungen 54 in der Wandplatte 42 zusammen. Eine derartige Befestigungsvertiefung ist in Fig. 13 dargestellt.

Die Befestigungsvertiefung 54 wird von einer Ausformung in der Wandplatte 42 gebildet, ohne dass dabei die Wandplatte 42 unterbrochen wird, d.h. ohne dass im Bereich der Befestigungsvertiefung 54 eine Öffnung in der Wandplatte ausgeformt ist. Mit anderen Worten ist die Befestigungsvertiefung 54 gegen aussen geschlossen. Dadurch behält die Wandplatte ihre Dichtigkeit bei und es wird verhindert, dass im Bereich der Befestigungsvertiefung 54 ein unerwünschter Gasaustausch zwischen innen und aussen stattfindet.

Von der Innenseite her gesehen, d.h. vom Nutzraum 2 her, besitzt die Befestigungsvertiefung 54 eine etwa hantelförmige Eingangskontur. Sie erstreckt sich entlang einer Längsrichtung 74 und besitzt zwei Aussenbereiche 76 und einen Mittelbereich 78. Senkrecht zur Längsrichtung 74 sind die Aussenbereiche 76 eingangsseitig in ihrer maximalen Ausdehnung X1 grösser als der Mittelbereich 78 in seiner minimalen Ausdehnung X2 (siehe Fig. 13).

Die Längsrichtung 74 erstreckt sich parallel zur Hauptfläche der Wandplatte 42.

Wie insbesondere aus Fig. 14 ersichtlich, welche einen Schnitt senkrecht zur Längsrichtung 74 durch den Mittelbereich 78 zeigt, sind die Wandabschnitte 80 der Befestigungsvertiefung 54 im Bereich des Mittelbereichs 78 hinterschnitten, d.h. die Ausdehnung der Befestigungsvertiefung 54 senkrecht zur Längsrichtung 74 nimmt gegen aussen hin zumindest in einem Abschnitt zu, und zwar von einer minimalen Ausdehnung D1 zu einer maximalen Ausdehnung D2.

Das Spreizelement 56 greift mit den Spreizgliedern 64 in den Mittebereich 78 der Befestigungsvertiefung 54 ein. Es ist so bemessen, dass die Seitenflächen der Spreizglieder 64 im entspannten Zustand einen maximalen Abstand etwas grösser als D1 haben, so dass sie beim Einführen in die Befestigungsvertiefung 54 elastisch verformt werden.

Weiter nimmt aber der Abstand der Seitenflächen der Spreizglieder 64 gegen innen zunächst ab, so dass die Spreizglieder 64 sich beim Einführen in die Befestigungsvertiefung 54 nach einer maximalen Verformung wieder zunehmend entspannen können. Dadurch erzeugt der Befestigungsmechanismus im eingebauten Zustand eine Zugkraft auf das zu befestigende Bauteil aus.

Seitlich der Befestigungsvorrichtung 50 bildet das zu befestigende Bauteil, hier der Formkörper 4, mindestens eine Schulter 82 aus, welche gegen die Wandplatte 42 anschlägt. Dabei sind die Bauteile mit Vorteil so bemessen, dass der Befestigungsmechanismus auch noch in dieser Position, d.h. wenn die Schulter 82 an der Wandplatte 42 anschlägt, immer noch eine Zugkraft auf das Spreizelement 56 ausübt und so das zu befestigende Bauteil spielfrei hält.

Bevorzugt ist deshalb die Tiefe T1 der Befestigungsvertiefung 54 grösser als der Überstand T2 des Spreizelements 56 über die Schulter 82.

Wie am besten aus Fig. 14 bis 16 ersichtlich, greifen die beiden Zentrierelemente 58 in die Aussenbereiche 76 der Befestigungsvertiefung 54 ein. Sie stellen sicher, dass das Spreizelement 64 im hinterschnittenen Mittelbereich 78 zu liegen kommt.

In den Aussenbereichen 76 ist die Befestigungsvertiefung 54 nicht hinterschnitten, d.h. ihre Ausdehnung nimmt gegen aussen stetig ab.

Indem die Befestigungsvertiefung einen hinterschnittenen Mittelbereich 78 zwischen zwei nicht hinten Aussenbereichen 76 besitzt, wird es möglich, die Befestigungsvertiefung 54 in der Wandplatte 52 durch Tiefziehen herzustellen. Hierzu wird ein geeignetes Formwerkzeug, welches ebenfalls hinterschnitten ist und die Negativform der zu bildenden Befestigungsvertiefung 54 besitzt, von innen gegen die erhitzte und weiche Wandplatte 52 gedrückt und die Wandplatte wird mit geeignetem Druckunterschied zwischen innen und aussen an das Formwerkzeug angeformt. Nach mindestens teilweisem Aushärten kann sodann das Formwerkzeug unter Zwangsentformung entfernt werden, d.h. unter elastischer Verformung der Wände 80 des Mittelbereichs 78.

### Bemerkungen:

In den obigen Beispielen ist als Beispiel eines Kühlgeräts ein Kühlschrank dargestellt. Das Kühlgerät kann jedoch z.B. auch als Tiefkühlgerät oder Weinlager oder anderes Kühlgut ausgestaltet sein, oder es kann sich um ein Kombinationsgerät mit mehreren Kühlzonen für unterschiedliche Temperaturen handeln.

In der Ausführung nach Fig. 10 ist der Verdampfer am Kühlluftkanal, namentlich am zweiten Abschnitt 6b, angeordnet. Er kann auch mindestens teilweise im Kühlluftkanal angeordnet sein.

Die beschriebenen Befestigungsmechanismen zeichnen sich durch einen sehr einfachen Aufbau, einfache Herstellbarkeit und hohe Robustheit auf. Sie erlauben es, Bauteile im Nutzraum eines Kühlgeräts zu befestigen, ohne dass die Hülle des Nutzraums, d.h. die Wandplatte 52, durchbrochen werden muss.

Befestigungsmechanismen der hier gezeigten Art können z.B. auch dazu verwendet werden, andere Bauteile als das Rückwandelement 3 im Nutzraum zu befestigen, so z.B. Ablagevorrichtungen und Behälter für zu kühlende Gegenstände. Sie können an allen vertikalen Wänden, an der Decke, am Boden und/oder an der Türe des Geräts vorgesehen sein. Unter "Wandplatte" ist entsprechend z.B. auch eine an der Türe, an der Decke oder am Boden angeordnete Platte zu verstehen.

In der obigen Ausführung des Befestigungsmechanismus sind hinterschnittene Wandabschnitte 80 vorgesehen, zwischen denen das Spreizelement 56 angeordnet ist. Es kann grundsätzlich jedoch auch nur einer der beiden Wandabschnitte 80 hinterschnitten sein. Die Verwendung von zwei hinterschnittenen Wandabschnitten ergibt jedoch einen besseren Halt.

Mit Vorteil sind der Lüfter 10 und die Öffnung 12 im oberen Viertel des Rückwandelements 3 angeordnet. Sie können jedoch auch tiefer angeordnet sein.

Anstelle des in Fig. 11 - 16 gezeigten Befestigungsmechanismus kann auch eine andere Art von Befestigung vorgesehen, z.B. basierend auf Industrie-Klettverbindungen oder anderen, vorzugsweise lösbaren Verbindungsmechanismen.

In der Ausführung nach Fig. 10 verläuft die Wandplatte 42 im oberen Abschnitt 3a und im unteren Abschnitt 3b auf gleicher Tiefe, weshalb der erste, dickere Abschnitt 3a weiter in den Nutzraum 2 eingreift als der zweite, dünnere Abschnitt 3b. Denkbar ist jedoch auch, dass die Wandplatte 42 zum Teil zurückversetzt wird, um dem dickeren Abschnitt des Rückwandelements 3 mehr Platz zu bieten, insbesondere im ersten Abschnitt 3a, in welchem Falle die Deckplatte 5 z.B. eben verlaufen kann. Dies gilt insbesondere, aber nicht nur, für die Ausführung gemäss Fig. 17.

Denkbar ist auch, dass die Kühlluft im und/oder hinter dem Rückwand nicht von oben nach unten, sondern z.B. auch U-förmig, von unten nach oben oder seitlich läuft. Weitere Varianten sind auch möglich.

In den obigen Ausführungen wird der Befestigungsmechanismus von der Befestigungsvorrichtung 50 sowie der an der Wandplatte 42 angeordneten Befestigungsvertiefung 54 gebildet. Denkbar ist aber auch, dass (anstelle einer Vertiefung) an der Wandplatte 42 ein Befestigungsvorsprung angeordnet ist, welcher in den Nutzraum ragt und vom Spreizelement 56 von aussen (in seinen hinterschnittenen Wandabschnitten) umfasst wird.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Kühlgerät mit
einem Nutzraum (2),
mindestens einer Wandplatte (42), welche eine Wand des Nutzraums (2) bildet,
mindestens einem Bauteil (3), welches innenseitig an der Wandplatte (42) befestigt ist und
einem Befestigungsmechanismus (50, 54) zum Befestigen des Bauteils (3) an der Wandplatte (42),
**dadurch gekennzeichnet, dass** der Befestigungsmechanismus (50, 54) eine am Bauteil (3) angeordnete Befestigungsvorrichtung (50) sowie eine an der Wandplatte (42) angeordnete Befestigungsvertiefung (54) oder einen an der Wandplatte (42) angeordneten Befestigungsvorsprung aufweist, wobei die Befestigungsvertiefung (54) bzw. der Befestigungsvorsprung mindestens einen hinterschnittenen Wandabschnitt (80) aufweist und
wobei die Befestigungsvorrichtung (50) ein Spreizelement (56) aufweist, welches in die Befestigungsvertiefung (54) eingreift bzw. den Befestigungsvorsprung umgreift und am hinterschnittenen Wandabschnitt (80) gehalten ist.

2. Kühlgerät nach Anspruch 1, wobei die Befestigungsvertiefung (54) bzw. der Befestigungsvorsprung zwei hinterschnittene Wandabschnitte (80) aufweist, in die das Spreizelement (56) eingreift bzw. welche das Spreizelement (56) umgreift.

3. Kühlgerät nach einem der vorangehenden Ansprüche wobei die Befestigungsvertiefung (54) bzw. der Befestigungsvorsprung entlang einer Längsrichtung (74) zwei Aussenbereiche (76) und zwischen den Aussenbereichen (76) einen Mittelbereich (78) aufweist, wobei der mindestens eine hinterschnittene Wandabschnitt (80) im Mittelbereich (78) angeordnet ist, und wobei das Spreizelement (56) mindestens teilweise in den Mittelbereich eingreift.

4. Kühlgerät nach Anspruch 3, wobei die Befestigungsvertiefung (54) bzw. der Befestigungsvorsprung in den Aussenbereichen (76) nicht hinterschnitten ist.

5. Kühlgerät nach einem der Ansprüche 3 oder 4, wobei senkrecht zur Längsrichtung (74) die Aussenbereiche (76) eine maximale Ausdehnung (X1) grösser als eine minimale Ausdehnung (X2) des Innenbereichs (78) haben.

6. Kühlgerät nach einem der Ansprüche 3 bis 5, wobei die Befestigungsvorrichtung (50) weiter zwei Zentrierelemente (58) aufweist, welche in die Aussenbereiche (76) eingreifen und zwischen denen das Spreizelement (56) angeordnet ist.

7. Kühlgerät nach einem der vorangehenden Ansprüche wobei das Bauteil einen Formkörper (4) aus Isolationsmaterial aufweist, wobei im Formkörper (4) eine Öffnung (60) vorgesehen ist, in welcher das Spreizelement (56) aufgenommen ist.

8. Kühlgerät nach Anspruch 6 und 7, wobei der Formkörper (4) die Zentrierelemente (58) bildet.

9. Kühlgerät nach einem der Ansprüche 7 oder 8, wobei das Spreizelement (56) einen Kopf (62) an einem innenseitigen Ende, mindestens zwei Spreizglieder (64) an einem aussenseitigen Ende, sowie einen Körper (66), der den Kopf (62) mit den Spreizgliedern (64) verbindet, aufweist, wobei der Kopf (62) einen grösseren Durchmesser und/oder eine grössere Fläche als der Körper (66) und die Spreizglieder (64) hat, und wobei der Kopf (62) an einer Innenseite des Formteils (4) anliegt.

10. Kühlgerät nach Anspruch 9, wobei der Formkörper (4) an seiner Innenseite eine Vertiefung (70) aufweist und wobei der Kopf (62) in der Vertiefung (70) sitzt.

11. Kühlgerät nach Anspruch 10, wobei das Bauteil eine einer Innenseite des Formteils (4) befestigte Deckplatte (5) aufweist, welche die Vertiefung (70) überdeckt, und insbesondere wobei am Kopf (62) mindestens eine Erhöhung (72) angeordnet ist, und insbesondere wobei die Erhöhung die Deckplatte (5) berührt.

12. Kühlgerät nach einem der vorangehenden Ansprüche, wobei das Bauelement (3) mindestens eine Schulter (82) aufweist, welche an der Wandplatte (42) anschlägt und in dieser Position vom Befestigungsmechanismus an die Wandplatte (42) gezogen wird.

13. Kühlgerät nach einem der Ansprüche 7 bis 11 und nach Anspruch 12, wobei die Schulter (82) vom Formkörper gebildet ist.

14. Kühlgerät nach einem der vorangehenden Ansprüche, wobei das Bauteil (3) ein Rückwandelement bildet, in oder an welchem ein Kühlluftkanal (10a, 10b) ausgestaltet ist, wobei im oder am Kühlluftkanal ein Kühlelement (40) angeordnet ist.

15. Kühlgerät nach einem der vorangehenden Ansprüche, wobei die Befestigungsvertiefung (54) bzw. der Befestigungsvorsprung gegen aussen geschlossen ist.

16. Verfahren zum Herstellen des Kühlgeräts nach einem der vorangehenden Ansprüche, wobei die Befestigungsvertiefung (54) bzw. der Befestigungsvorsprung durch Tiefziehen der Wandplatte (42) ausgeformt wird.
